# EUROPÄISCHE PATENTSCHRIFT

(11) **EP 0 676 620 B1**
(45) Veröffentlichungstag und Bekanntmachung des Hinweises auf die Patenterteilung: **20.08.1997**
(21) Anmeldenummer: 94104762.3
(22) Anmeldetag: 25.03.1994
(51) Int. Cl.: G01D 5/16

(54) **Magnetisches Messsystem**
Magnetic measuring system
Système magnétique de mesure

(43) Veröffentlichungstag der Anmeldung: 11.10.1995
(73) Patentinhaber: Dr. Johannes Heidenhain GmbH, D-83292 Traunreut (DE)
(72) Erfinder: Spies, Alfons, Dipl.-Ing., D-83358 Seebruck (DE)

(56) Entgegenhaltungen:
- DE-A- 4 129 576
- PATENT ABSTRACTS OF JAPAN vol. 15, no. 347 (P-1246) 3. September 1991 & JP-A-03 131 717 (KOMATSU LTD.) 5. Juni 1991
- PATENT ABSTRACTS OF JAPAN vol. 5, no. 196 (P-093) 12. Dezember 1981 & JP-A-56 118 612 (SONY CORP.) 17. September 1981

## Beschreibung

Die Erfindung bezieht sich auf eine Positionsmeßeinrichtung gemäß dem Oberbegriff des Anspruches 1.

Eine gattungsgemäße Positionsmeßeinrichtung ist aus der JP 3-131717 bekannt. Dort wird ein magnetisches Wechselfeld zur Linearisierung der Ausgangscharakteristik des beschriebenen magnetischen Positionsmeßsystems vorgesehen, welches in einer bestimmten Art und Weise dimensioniert werden muß, um eventuelle Fehlmessungen zu vermeiden. So muß demzufolge die Frequenz als auch die Stärke des angelegten Wechselfeldes in einer bestimmten Art und Weise dimensioniert werden. Details hinsichtlich der vorteilhaften Auswertung der resultierenden Ausgangssignale der magnetfeldempfindlichen Elemente finden sich in dieser Druckschrift nicht.

Aus der DE 28 34 519 A1 ist eine digitale Längenmeßvorrichtung bekannt. mit zwei relativ zueinander verstellbaren Teilen, von denen einer einen Maßstab und der andere einen Detektor zum Abtasten des Maßstabes und zum Erzeugen elektrischer Signale, die der abgetasteten Länge entsprechen, trägt, und mit einer Elektronik zum Verarbeiten der Detektorsignale, wobei der Maßstab einen Markierungsträger mit magnetisierbarem Material aufweist, welcher in vorbestimmten Abständen zur Bildung von ablesbaren Markierungen magnetisiert ist, und wobei der Detektor ein Lesekopf für die Markierungen ist. Als eine weiterverarbeitende Einrichtung kann dabei eine Digital-Anzeigevorrichtung verwendet werden. Der Markierungsträger kann dabei eine Magnetschicht sein, wobei die Markierungen durch sinusförmige Magnetisierung zweier Spuren gebildet sind, wobei für jede Spur je ein Lesekopf vorhanden ist. Der Detektor kann mindestens einen flußempfindlichen Magnetkopf aufweisen, der zum Lesen bei geringer Relativgeschwindigkeit zwischen Detektor und Markierungsträger nach dem Prinzip eines magentischen Modulators geschaltet ist. Bei der angegebenen Veröffentlichung fehlen detaillierte Angaben über die Ausführung des Detektors vollständig.

Ferner ist aus der EP 0 069 392 A2 eine digitale Positionsmeßeinrichtung bekannt, bei der ein Detektor vorgesehen ist, der einen magnetoresistiven Sensor aufweist. Dort sind magnetoresistive Sensoren mit unterschiedlichen Kennlinien beschrieben und Brückenschaltungen mit derartigen Sensoren offenbart.

Der Erfindung liegt die Aufgabe zugrunde, bei einer Positionsmeßeinrichtung eine Abtasteinheit mit magnetfeldempfindlichem Sensor zu schaffen, die empfindlich gegen störende Fremdfelder ist, punktverschiebungen der Sensoren ausgleicht und die wenig Oberwellenanteile erzeugt.

Diese Aufgabe wird von einer Positionsmeßeinrichtung mit den Merkmalen des Anspruches 1 gelöst.

Die Vorteile der erfindungsgemäßen Positionsmeßeinrichtung liegen in deren Funktionssicherheit, in der Stabilisierung des Arbeitspunktes der magnetfeldempfindlichen Elemente innerhalb ihrer Kennlinie und den daraus resultierenden positiven Eigenschaften.

Mit Hilfe der Zeichnungen soll anhand von Ausführungsbeispielen die Erfindung näher erläutert werden.

Es zeigt
- Figur 1a: eine Prinzipdarstellung einer Positionsmeßeinrichtung;
- Figur 1b: eine Einzelheit aus Figur la;
- Figur 1c: eine variierte Einzelheit aus Figur 1a;
- Figur 2: eine Positionsmeßeinrichtung mit magnetischem Hilfsfeld;
- Figur 3: eine schematische Darstellung von Maßstab, Abtastelementen und Hilfsfeld;
- Figur 4: eine schematische Anordnung magnetoresistiver Elemente gemäß Figur 3;
- Figur 5: eine weitere Anordnung magnetoresistiver Elemente in einer Brückenschaltung;
- Figur 6: eine Kennlinie eines magnetoresistiven Elementes mit Signalverlauf bei Aussteuerung mit einem rechteckförmigen Hilfsfeld;
- Figur 7: einen Signalverlauf bei Anlegung eines dreieckförmigen Hilfsfeldes;
- Figur 8: ein Blockschaltbild und
- Figur 9: Sensoren mit stromdurchflossenden Leitern zur Erzeugung des Hilfsfeldes.

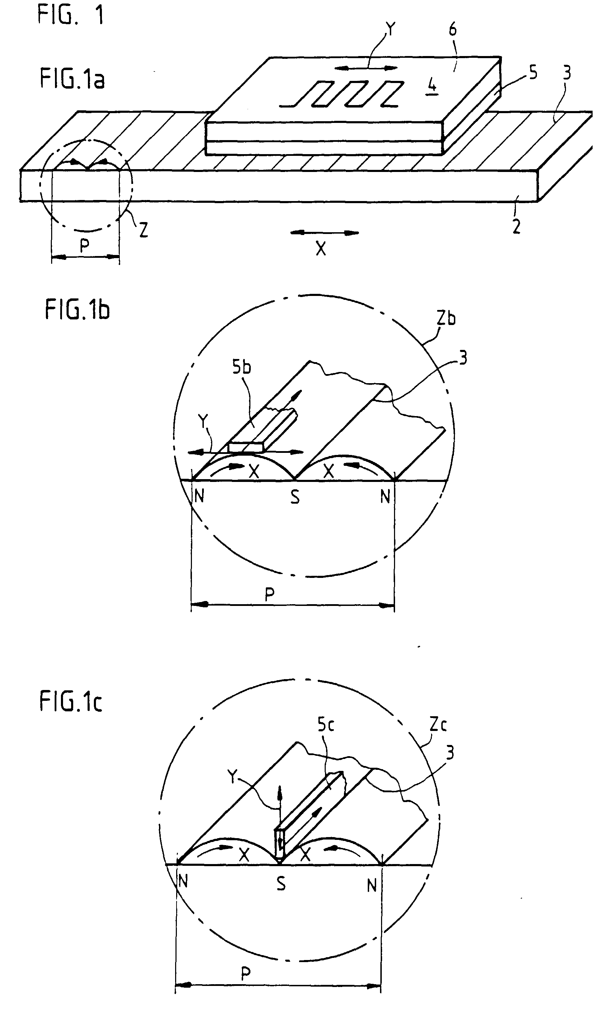

In Figur 1a ist eine Prinzipdarstellung einer magnetischen Längenmeßeinrichtung 1 gezeigt. Die genmeßeinrichtung 1 besteht im wesentlichen aus einem Maßstab 2, der eine periodische Meßteilung 3 aufweist, sowie aus einer Abtasteinheit 4 zur Abtastung der Meßteilung 3. Der Maßstab 2 besteht aus magnetischem Material und ist abwechselnd mit gegensätzlicher Feldstärke magnetisiert - daraus bildet sich die periodische Meßteilung 3 mit der lungsperiode P. Die Magnetisierung erfolgt längs der Ebene, in der sich der Maßstab 2 erstreckt, kann aber auch senkrecht dazu verlaufen, was hier jedoch nicht gezeigt ist.

Die Magnetisierung erzeugt ein Streufeld, welches symbolisch in den vergrößerten Einzelheiten Zb und Zc in den Figuren 1b und 1c dargestellt ist.

Die periodische Meßteilung 3 wird von magnetoresistiven Elementen 5 abgetastet, die sich in der tasteinheit 4 befinden und auf die in der Beschreibung zu den folgenden Figuren noch näher eingegangen wird. Dabei wird als Bezugszeichen eine 5 für das oder die magnetoresistiven Elemente eingesetzt und gegebenenfalls um die jeweilige Figurenbezifferung als Index ergänzt.

In Figur 1b ist das magnetoresistive Element 5b in der zur Meßteilung 3 parallelen Ebene waagerecht liegend angeordnet. Gemäß Figur 1c ist das magnetoresistive Element 5c in der zur Meßteilung 3 parallelen Ebene senkrecht stehend angeordnet.

Für die Erfindung ist jeder magnetfeld-empfindliche Sensor mit quadratischer Kennlinie geeignet. So können als Sensoren auch Feldplatten verwendet werden.

Das erfindungsgemäße Hilfsfeld muß nur jeweils in der Richtung liegen, in der der Sensor empfindlich ist.

Die Abtasteinheit 4 weist darüber hinaus einen Baustein 6 auf, der das magnetische Hilfsfeld Y erzeugt, welches elektromagnetisch erzeugt wird und von einem Wechselfeld gebildet wird.

Das Hilfsfeld Y wirkt in der Richtung, in der die magnetoresistiven Elemente 5 empfindlich sind.

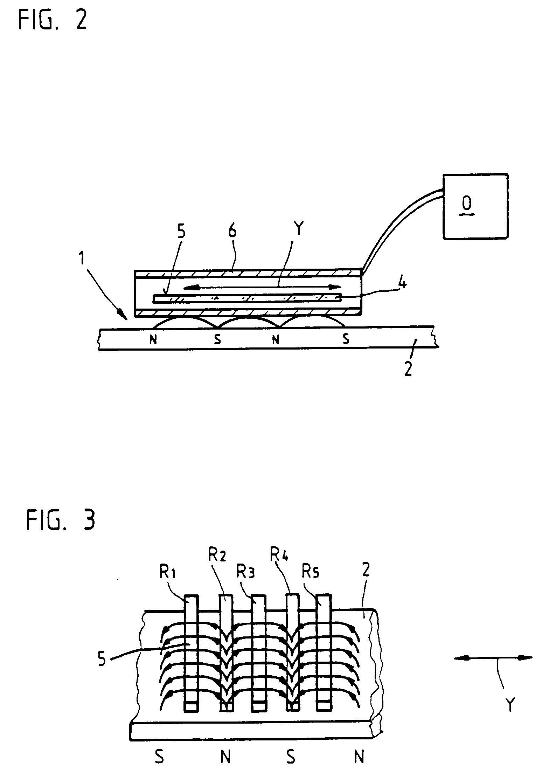

Die in Figur 2 dargestellte Anordnung zeigt schematisch die Positionsmeßeinrichtung 1 mit einer Spule 6 zur Erzeugung des Hilfsfeldes Y. Der Maßstab 2 wird von einer Abtasteinheit 4 abgetastet. Die Abtasteinheit 4 weist magnetoresistive Elemente 5 auf, die von der Spule 6 umschlossen werden.

Die magnetoresistiven Elemente - kurz auch Sensoren 5 - genannt, sind von der Spule 6 umschlossen, die ein Hilfsfeld Y erzeugt, welches in der Ebene der Sensoren 5 liegt, jedoch senkrecht zu der Sensor-Längserstreckung verläuft. Die Spule 6 wird von einem Oszillator 0 mit einem hochfrequenten Wechselstrom gespeist.

Es sei angenommen, daß die Spule 6 mit einem rechteckförmigen Wechselstrom gespeist wird. Dann hat das dem Maßstabsfeld X überlagerte Hilfsfeld Y ebenfalls einen rechteckförmigen Verlauf.

In Figur 3 ist die Lage der Sensorstriche 5 zum magnetischen Maßstab 2 sowie die Richtung des Hilfsfeldes Y skizzenhaft angedeutet.

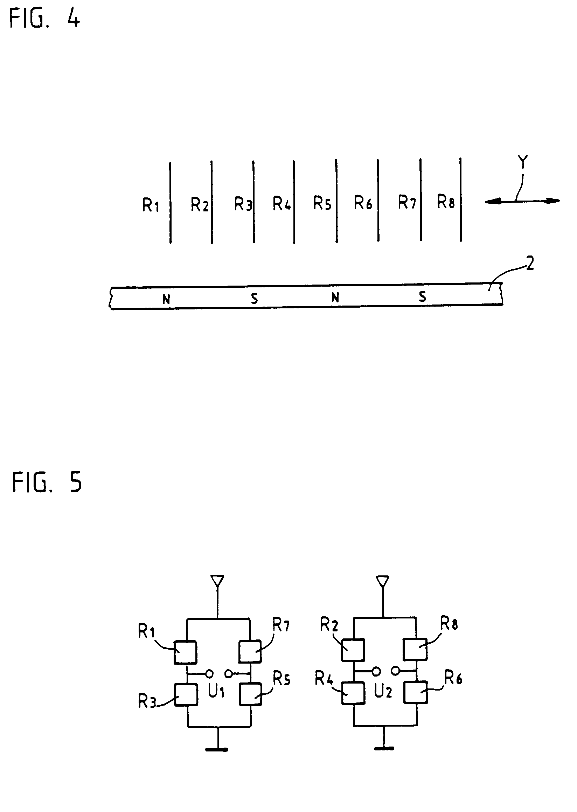

Figur 4 zeigt die weitere Schematisierung einer Anordnung gemäß Figur 3. Die Sensoren sind als elektrische Ersatzwiderstände Ri (i=1...n) über dem Maßstab 2 dargestellt, um auf das Ersatzschaltbild mit zwei Voll-Brückenschaltungen gemäß Figur 5 überzuleiten.

Diese Figur 5 zeigt die Verschaltung der Sensoren Ri zu zwei Voll-Brückenschaltungen.

Die Brücken werden mit konstantem Strom oder konstanter Spannung gespeist.

An den Ausgängen der Brücken entstehen zwei amplitudenmodulierte Signale U1 und U2 mit der Frequenz mit der die Spule 6 gespeist wird.

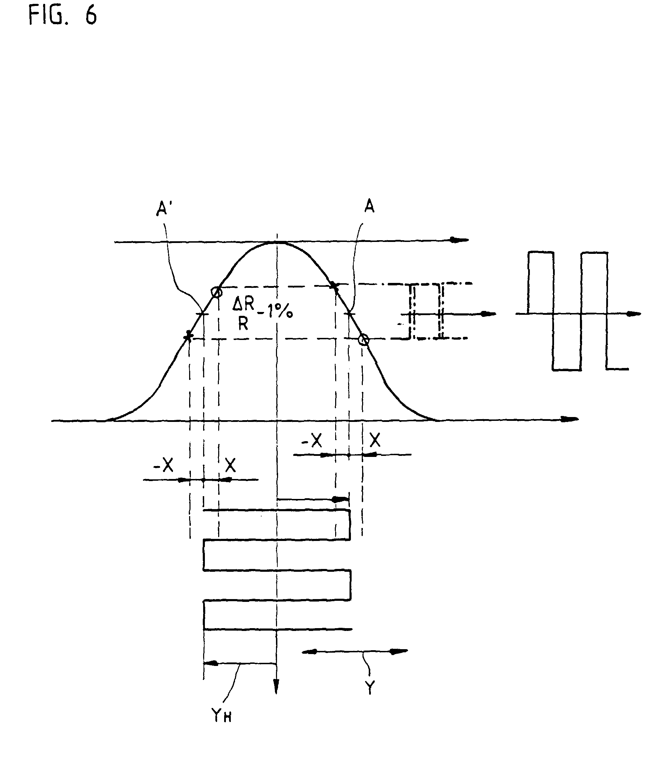

Die Entstehung eines amplitudenmodulierten Signales ist in Figur 6 für eine Halbbrücke gezeigt.

Das Hilfsfeld Y hat die Amplitude Y_{H} wie im unteren Teil der Figur 6 gezeigt ist. Das Hilfsfeld Y steuert den Sensor, der eine Viertelbrücke darstellt bis zu einem bestimmten Arbeitspunkt A, A' (z.B. DR/R=1%) aus. Kommt zu dem Hilfsfeld Y ein Maßstabsfeld X, so wird eine Viertelbrücke bis zu dem mit einem Kreis bezeichneten Punkt ausgesteuert, die andere Viertelbrücke jedoch nur bis zu dem mit einem Kreuz bezeichneten Punkt ausgesteuert, da die beiden Viertelbrücken räumlich um eine halbe Teilungsperiode P versetzt sind. Da die beiden Viertelbrücken definitionsgemäß zu einer Halbbrücke verschaltet sind, erhält man als Ausgangssignal die Differenz der beiden Aussteuerungen. Man erhält es durch Spiegelung der Felder an der Empfindlichkeitskurve der Sensoren, wie in Figur 6 rechts zeigt ist.

Die Ausgangssignale U1 und U2 können entweder mit einem phasenempfindlichen Gleichrichter vorzeichenrichtig demoduliert und als Gleichstromsignale den üblichen Interpolationsschaltungen zugeführt werden, oder es wird eine Auswerteschaltung ähnlich den bei Resolver- oder Synchroconvertern gebräuchlichen Schaltungen benützt.

Wenn das Hilfsfeld Y groß gegenüber dem Maßstabsfeld X ist und so gewählt ist, daß der Arbeitspunkt im linearen Teil der Empfindlichkeitskurve der Sensoren 5 liegt, hat das Ausgangssignal U1 bzw. U2 weitgehend den gleichen zeitlichen Verlauf wie das Hilfsfeld Y. Dies ist jedoch nicht Voraussetzung für die Funktion der beschriebenen Anordnung.

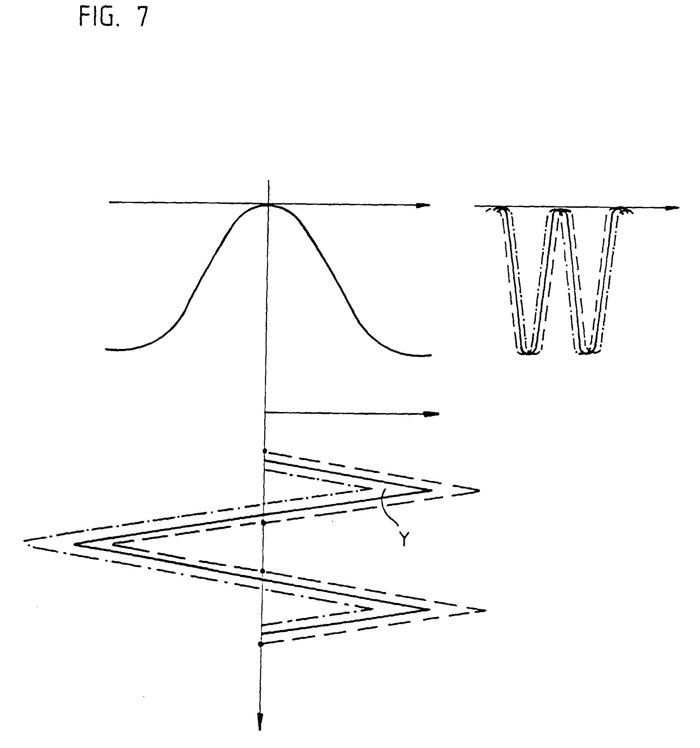

Figur 7 zeigt den Signalverlauf des Ausgangssignales U1 bzw. U2, wenn das Hilfsfeld Y einen eckförmigen Verlauf hat. Hier ist zusätzlich angenommen, daß das Hilfsfeld Y die Sensoren 5 bis über die Sättigung aussteuert. Der Signalverlauf ergibt sich wieder durch Spiegelung der Felder an der findlichkeitskurve. Das Ausgangssignal U1 einer Halbbrücke ergibt sich als Differenz der beiden Viertelbrückensignale und enthält neben der Speisefrequenz viele ungerade Oberwellen. Die Auswertung kann wieder durch phasenempfindliche Gleichrichtung erfolgen, es können aber auch andere Auswerteverfahren angewandt werden, die gezielt eine Oberwelle benützen.

Die Aussteuerung mit großen Hilfsfeldern Y bis zur Sättigung, oder darüber hinaus, hat den Vorteil, daß die Sensoren 5 durch externe Fremdfelder nicht gestört werden können.

Das Hilfsfeld Y kann auch einen rein sinusförmigen Verlauf haben, was aber hier nicht ausdrücklich gezeigt werden muß.

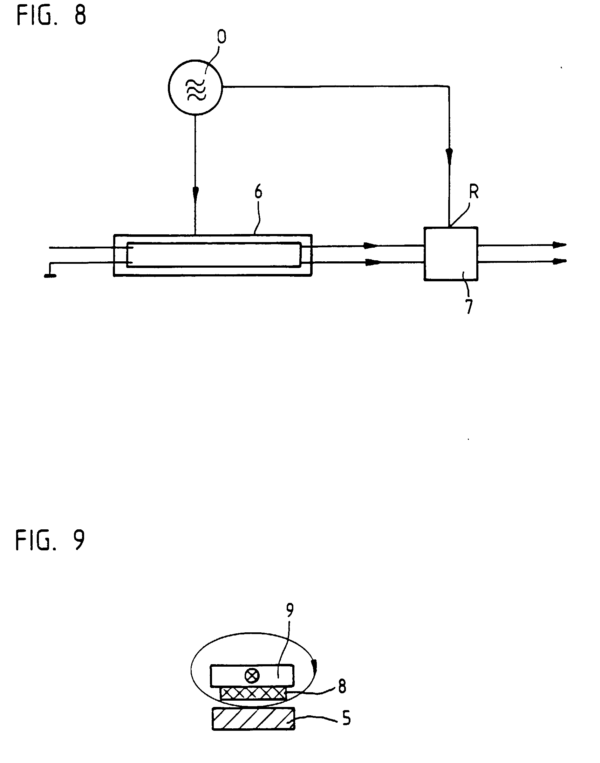

Figur 8 zeigt das Blockschaltbild für eine Auswertung ähnlich der bei Resolvern üblichen.

Der Oszillator 0 erzeugt ein Wechselfeld für die Spule 6, die Oszillatorspannung liegt gleichzeitig am Referenzeingang R der Auswerteeinrichtung 7. Zwischen Oszillatorausgang und Referenzeingang R können noch Phasenschieber angeordnet sein, die hier nicht gezeigt sind.

Statt das Hilfsfeld Y mit einer Spule zu erzeugen, können auch andere Anordnungen zur Erzeugung von Hilfsfeldern angewandt werden. Eine Möglichkeit ist in Figur 9 beispielhaft gezeigt. In nächster Nähe der Sensoren 5 sind, durch eine isolierende Zwischenschicht 8 getrennt, stromführende Leiter 9 angeordnet, deren Feld die Sensoren 5 beeinflußt.

## Patentansprüche

1. Positionsmeßeinrichtung (1) zur Messung der Relativlage zweier zueinander beweglicher Objekte, bei der eine periodische, magnetische Meßteilung (3) in Meßrichtung von einer Abtasteinheit (4) mittels wenigstens eines magnetfeldempfindlichen Elementes (5) zur Erzeugung von positionsabhängigen Ausgangssignalen (U1, U2) abgetastet wird, aus denen in einer Auswerteeinrichtung (7) Positionsmeßwerte gebildet werden, wobei das wenigstens eine magnetfeldempfindliche Element in der Abtasteinheit in einer zur Meßteilung (3) parallelen Ebene angeordnet ist und von einem magnetischen Wechselfeld (Y) magnetisch vorgespannt wird,
dadurch gekennzeichnet, daß
das magnetische Wechselfeld (Y) von einer Spule (6) erzeugt wird, die von einem Oszillator (0) gespeist wird, wobei die Oszillatorspannung zudem gleichzeitig als Referenzsignal an einem Referenzeingang (R) der Auswerteeinrichtung (7) anliegt.

2. Positionsmeßeinrichtung nach Anspruch 1, dadurch gekennzeichnet, daß das magnetische Hilfsfeld (Y) kleiner oder größer ist als die Sättigungsfeldstärke der magnetfeldempfindlichen Elemente (5).

3. Positionsmeßeinrichtung nach einem der Ansprüche 1 oder 2, dadurch gekennzeichnet, daß das Wechselfeld (Y) eine rechteckförmigen Verlauf oder einen dreieckförmigen Verlauf oder einen sinusförmigen Verlauf hat.

4. Positionsmeßeinrichtung nach Anspruch 1, dadurch gekennzeichnet, daß der Oszillator (O) in der Abtasteinheit angeordnet ist.

5. Positionsmeßeinrichtung nach Anspruch 1, dadurch gekennzeichnet, daß die Auswerteeinrichtung (7) in der Abtasteinrichtung (4) angeordnet ist.

6. Positionsmeßeinrichtung nach Anspruch 1, dadurch gekennzeichnet, daß die Positionswerte mittels phasenempfindlicher Gleichrichtung der positionsabhängigen Ausgangssignale (U1, U2) oder mittels Interpolation mit Synchron- oder Resolverkonvertern gebildet werden.

7. Positionsmeßeinrichtung nach Anspruch 1, dadurch gekennzeichnet, daß die magnetfeldempfindlichen Elemente (5) in der zur Meßteilung parallelen Ebene waagerecht liegend oder senkrecht stehend angeordnet sind.

8. Positionsmeßeinrichtung nach Anspruch 1, dadurch gekennzeichnet, daß das magnetfeldempfindliche Element (5) eine Feldplatte oder ein magnetoresistives Element ist.

## Claims

1. Position-measuring device (1) for measuring the relative position of two objects movable to one another, in which a periodic, magnetic measurement division (3) is scanned in the measurement direction by a scanner unit (4) by at least one element (5) sensitive to a magnetic field for generating position-dependent output signals (U1, U2), from which position measurement values are formed in an evaluation device (7), the at least one element sensitive to a magnetic field in being located in the scanner unit in a plane parallel to the measurement division (3) and being magnetically pre-stressed by a magnetic alternating field (Y), characterised in that the magnetic alternating field (Y) being generated by a coil (6), which is supplied from an oscillator (O), the oscillator voltage simultaneously being applied as a reference signal to a reference input (R) of the evaluation device (7).

2. Position-measuring device according to claim 1, characterised in that the magnetic auxiliary field (Y) is smaller or greater than the saturation field density of the elements (5) sensitive to the magnetic field.

3. Position-measuring device according to one of claims 1 or 2, characterised in that the alternating field (Y) has a rectangular configuration, a triangular configuration or a sinusoidal configuration.

4. Position-measuring device according to claim 1, characterised in that the oscillator (O) is located in the scanner unit.

5. Position-measuring device according to claim 1, characterised in that the evaluation device (7) is located in the scanner device (4).

6. Position-measuring device according to claim 1, characterised in that the position values are formed by means of phase-sensitive rectification of the position-dependent output signals (U1, U2) or by means of interpolation with synchronous or resolver converters.

7. Position-measuring device according to claim 1, characterised in that the elements (5) sensitive to the magnetic field are located horizontally to the plane parallel to the measurement division or in a perpendicular upright configuration.

8. Position-measuring device according to claim 1, characterised in that the element (5) sensitive to the magnetic field is a field plate or a magneto-resistive element.

## Revendications

1. Dispositif de mesure (1) pour la mesure de la position relative de deux objets mobiles l'un par rapport à l'autre, dans lequel une graduation de mesure (3) périodique magnétique est palpée dans la direction de mesure par une unité de palpage (4) à l'aide d'au moins un élément (5) sensible au champ magnétique aux fins de produire des signaux (U1, U2) de sortie dépendants de la position à partir desquels des valeurs de mesure de position sont formées dans une unité de traitement (7), l'élément sensible au champ magnétique, au nombre d'au moins un, de l'unité de palpage étant disposé dans un plan parallèle à la graduation de mesure (3) et étant polarisé magnétiquement par un champ magnétique (Y) alternatif, caractérisé par le fait que le champ magnétique (Y) alternatif est produit par une bobine (6) qui est alimentée par un oscillateur (O), la tension de l'oscillateur étant en outre appliquée simultanément, en tant que signal de référence, à une entrée de référence (R) de l'unité de traitement (7).

2. Dispositif de meure de position selon la revendication 1, caractérisé par le fait que le champ magnétique (Y) auxiliaire est inférieur ou supérieur à l'intensité de champ de saturation des éléments (5) sensibles au champ magnétique.

3. Dispositif de meure de position selon la revendication 1 ou 2, caractérisé par le fait que le champ alternatif (Y) suit une courbe rectangulaire ou une courbe triangulaire ou une courbe sinusoïdale.

4. Dispositif de meure de position selon la revendication 1, caractérisé par le fait que l'oscillateur (O) est disposé dans l'unité de palpage.

5. Dispositif de meure de position selon la revendication 1, caractérisé par le fait que l'unité de traitement (7) est disposée dans l'unité de palpage (4).

6. Dispositif de meure de position selon la revendication 1, caractérisé par le fait que les valeurs de position sont formées par redressement en fonction de la phase des signaux de sortie (U1, U2) dépendants de la position ou par interpolation à l'aide de synchro-convertisseurs ou de convertisseurs résolveurs.

7. Dispositif de meure de position selon la revendication 1, caractérisé par le fait que les éléments (5) sensibles au champ magnétique sont disposés horizontalement ou debout verticalement dans le plan parallèle à la graduation de mesure.

8. Dispositif de meure de position selon la revendication 1, caractérisé par le fait que l'élément (5) sensible au champ magnétique est une magnétorésistance ou un élément magnétorésistif.
